# EUROPEAN PATENT SPECIFICATION

(11) **EP 0 579 474 B1**
(45) Date of publication and mention of the grant of the patent: **06.11.1996**
(21) Application number: 93305464.5
(22) Date of filing: 13.07.1993
(51) Int. Cl.: B23P 19/00, B23P 19/06, B23Q 7/16, B23Q 7/10, B65G 47/82

(54) **Row feeder for distribution of nuts**
Reihenspeiser zur Verteilung von Muttern
Alimentateur en rangée pour la distribution des écrous

(30) Priority: 17.07.1992 JP 213498/92
(43) Date of publication of application: 19.01.1994
(73) Proprietor: YUGENKAISHA SHINJO SEISAKUSHO, Nishinariku, Osaka (JP)
(72) Inventor: Shinjo, Hiroshi, Osaka (JP); Takeda, Arata, Kariya, Aichi (JP)
(74) Representative: Purvis, William Michael Cameron

(56) References cited:
- FR-A- 1 588 968
- FR-A- 2 596 311
- US-A- 3 163 324
- US-A- 3 971 116
- US-A- 4 503 993

## Description

The invention relates to a row feeder for distribution of nuts.

Such a row feeder can, for example, successively distribute nuts, as mechanical parts, from a delivery source to various nut attaching apparatus such as self-piercing nut assembling apparatus.

Self-piercing nuts are widely used and are usually affixed to metal plates such as those which are typically incorporated in automobiles. The self-piercing nut has an end face serving as a punch against the metal plate, thereby causing the nut to punch an installation aperture in the metal plate and simultaneously to fix the nut in place on the plate. In order to automate the nut attaching operation, the nut supplying apparatus widely employ vibrating feeders.

The popular self-piercing nuts (hereinafter simply called "nuts") can be applied to various metal places, typically to those which construct a car body. It is usual practice to attach in a one shot operation many such nuts to one metal plate as a workpiece, which in many cases is subjected at the same time to punching, blanking, trimming and/or partial drawing processes. Generally, several sets of the nut assembling apparatus are built into one press together with its main moulds or parts. Any passage through which the nuts are fed to such self-piercing nut assembling apparatus must not interfere with any punching dies or the like in the press. Thus, nut feeders are provided in the vicinity of the press to deliver the nuts through flexible chute hoses to the respective nut assembling apparatus. Due to provision of several of such apparatus in one press, many chute hoses may have to extend into the press and each of many nut feeders disposed near it must comprise a transfer device to feed the nuts into the flexible chute hose. As a result, not only usual works for changing or checking a press mould and/or maintenance work thereof but also operations for loading and unloading the press with a workpiece are rendered intricate. Further, the works for connecting to and disconnecting from the press many of the chute hoses are likewise made complicated, while still other operations and the operator's movement around the press are hindered. In addition, since an automatic mould exchanger in modern large-scaled presses usually takes considerable space, thereby leaving a little space for the nut feeders, it is considered very difficult and has been regarded as almost impossible to automate the connection and dis-connection of a plurality of the chute hoses to and from the press mould.

French Published Patent Application FR-A-2 596 311 describes a row-feeder for the distribution of nuts having a main unit, a guide passage to receive a certain number of successively delivered nuts, and a plurality of distribution channels, to which individual nuts are directed from the guide passage by reciprocating stroking pushers. Individual feed chutes are connected to the distribution channels, enabling the nuts to be fed directly to the part to which they are to be attached.

According to the invention there is provided a row feeder for distribution of nuts, the row feeder comprising:
a main unit;
a guide passage formed on the main unit so as to receive a number of successively delivered nuts in a series;
a plurality of distribution passages formed in the main unit and each extending from and perpendicular to the guide passage;
stroking pushers each reciprocable between its home position and its extended position across the guide passage so as to transfer the nuts therein to the respective distribution passages;
drivers causing the respective stroking pushers to reciprocate; and
individual feed chutes respectively connected to the distribution passages,
characterised in that the stroking pushers are controlled to operate in response to the operation of nut attaching apparatus incorporated in a press, each stroking pusher has a lower face formed with a cutout such that the successively delivered nuts are not prevented from advancing forward along the guide passage while any stroking pusher is disposed across it to enter the distribution passage, and each pusher is connected by a pin to a piston rod and is swingable vertically relative thereto, and a coiled spring always urges downwards a forward free end of the pusher, such that the free end is allowed to slide backward over the nut standing in the cutout and on the guide passage, so as to return to the home position.

The stroking pushers can be controlled to operate in response to nut attaching apparatus such as self-piercing nut assembling apparatus which are supplied with the nuts.

Each stroking pusher preferably has a lower face formed with a cutout, such that the successively delivered nuts are not prevented from advancing forward along the guide passage while any stroking pusher is disposed across it to enter the distribution passage.

It may be advantageous for an easier control of the overall system that the stroking pushers operate individually so that some of them can be rested if desired.

In the row feeder constructed as above, nuts which are successively delivered in series to the guide passage will be transferred by the stroking pushers one by one into the distribution passages connected to the feed chutes leading to the nut assembling apparatus or the like.

The invention is diagrammatically illustrated by way of example in the accompanying drawings, in which:-
Figure 1 is a side elevation schematically showing a manufacturing system in use, which system employs a row feeder according to the invention;
Figure 2 is an enlarged cross section of parts of the system in one of its states;
Figure 3 similarly is an enlarged cross section of parts in another state of the system;
Figure 4 is a plan view of a row feeder according to the invention for distributing nuts;
Figure 5 is a cross section taken on the line 5-5 in Figure 4 and showing a stroking pusher in detail;
Figure 6 is a cross section similar to Figure 5, but showing the stroking pusher at its home position; and
Figure 7 is a front elevation showing partly in cross section a joint member which is included in the system.

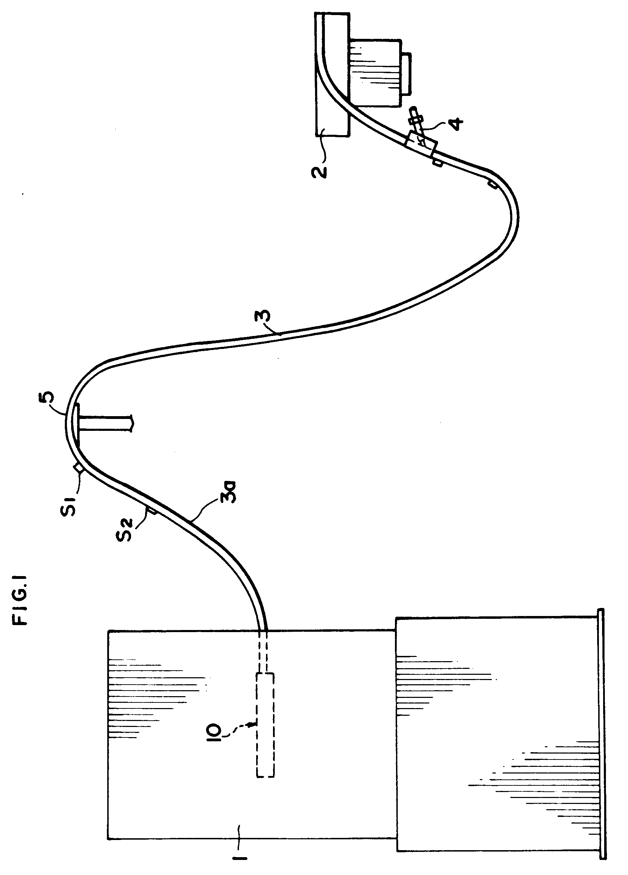

Referring to the drawings, Figure 1 illustrates a system which includes a row feeder 10 for distributing nuts, for example self-piercing nuts. The row feeder 10 is provided in association with a press 1 in which sets of nut attaching apparatus 7 as detailed below are incorporated. A nut supplier 2 disposed in the vicinity of the press 1 will arrange the self-piercing nuts to take their regulated position, before they are delivered in a successive manner to the row feeder 10 through a flexible chute hose 3. A pneumatically driven lift 4 is associated with the chute hose 3 at an appropriate region thereof. The self-piercing nuts are elevated to a peak 5 of the hose higher than the row feeder 10 and then descend thereto due to gravitational force. Sensors S₁ and S₂ for detecting the nuts are disposed along a descent portion 3a of the chute hose 3, to check that the descent portion 3a is always filled with a predetermined number of the nuts. The weight of all the nuts within the descent portion 3a will act on leading ones of them, so that they are delivered to the row feeder 10 in a continuous manner.

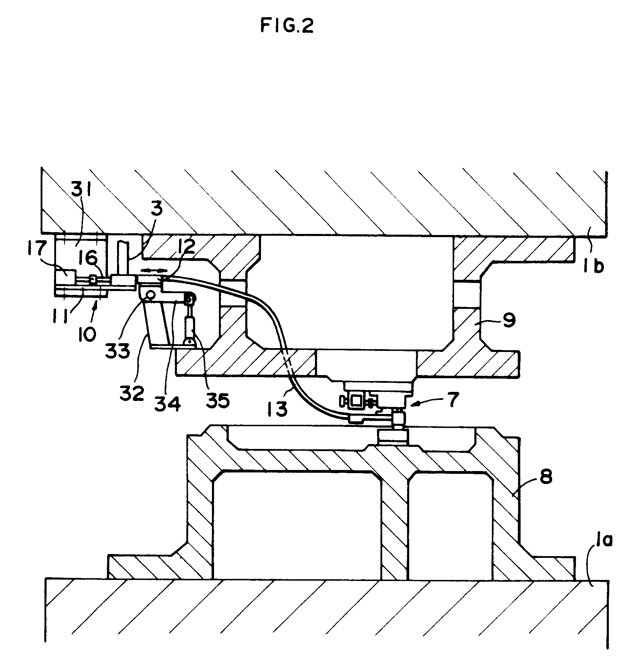

As shown in Figure 2, each self-piercing nut assembling apparatus 7 is secured to and between a lower mould 8 and an upper mould 9, together with the usual dies and punches not shown, wherein the lower mould is carried by a bolster 1a and the upper mould is detachably attached to a ram 1b of the press 1. Usually, several, for example more than ten, such apparatus 7 are mounted on one press 1, though only one of them is illustrated in the drawings. The self-piercing nut assembling apparatus 7 do not directly relate to the present invention. Thus, further details on its structure will not be given here, but only noting than an end face of each nut which will be fed through a feed chute 13 (described below) acts as a kind of punch. The nut thus punches a hole through a metal plate held on a swaging die and is simultaneously made integral with the plate.

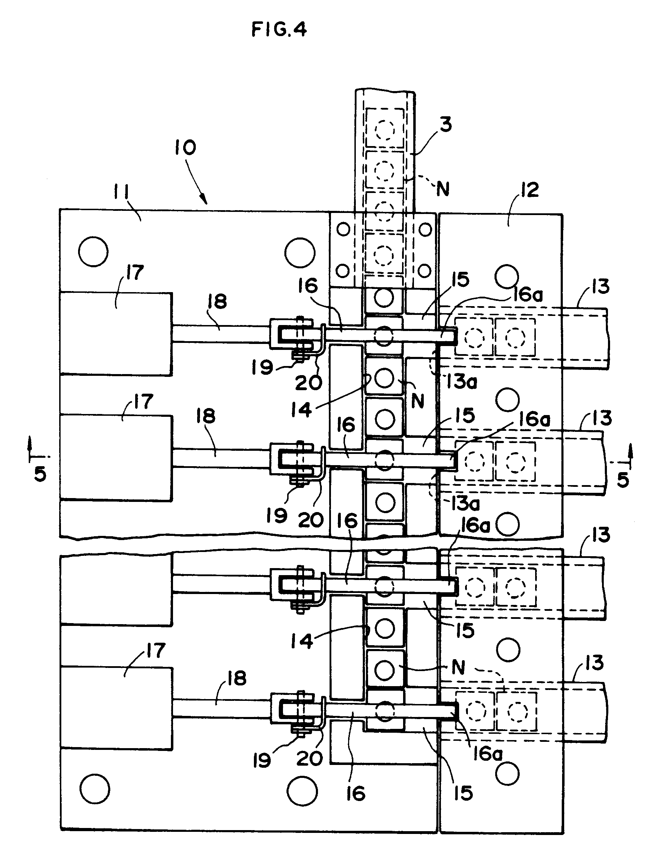

The row feeder 10 for distributing the nuts in this embodiment is carried partly by the ram 1b and also partly by the upper mould 9 of the press 1, as shown in Figures 4 to 7 and described below in detail referring thereto.

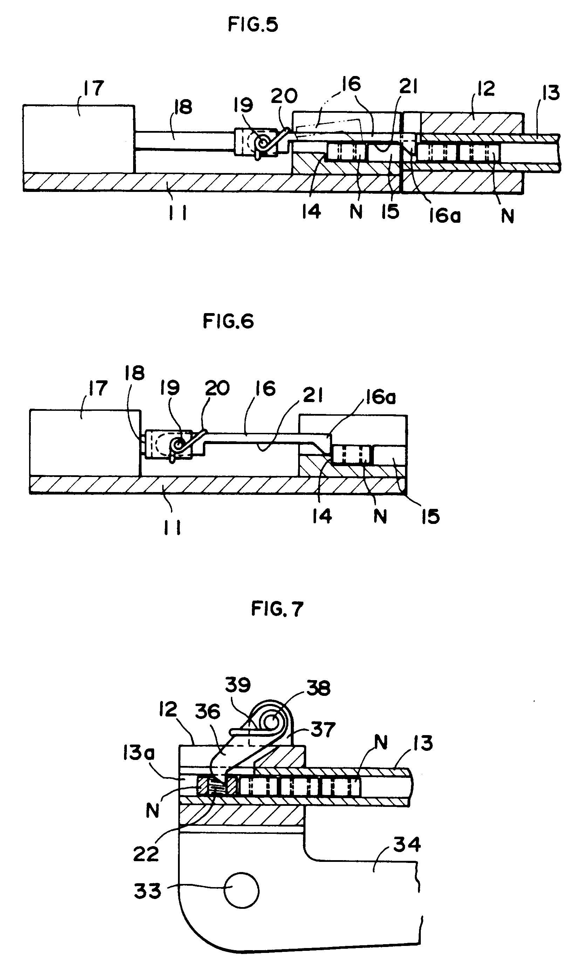

The row feeder 10 is composed of a main unit 11 and a joint member 12, with the main unit 11 connected to the chute hose 3 through which a plurality of the self-piercing nuts (abbreviated as "nuts") "N" are successively delivered to the main unit 11. The joint member 12 is constructed to hold in place a plurality of feed chutes 13 arrange side by side and at given intervals therebetween, with the feed chutes being connected to the main unit 11. The main unit 11 may be united integral with the joint member 12, but they are preferably made separable from one another for easier removal for changing of the upper mould 9 from the ram 1b in the press 1, as in the illustrated embodiment. The main unit 11 comprises a guide passage 14 formed thereon to receive a number of successively supplied nuts "N" in series, a plurality of distribution passages 15 similarly formed on the main unit 11 and each extending from and perpendicular to the guide passage 14, and the feed chutes 13 each secured to the corresponding distribution passage 15 in communication therewith. A plurality of stroking pushers 16 to push the nuts towards the respective distribution passages 15 are provided on the main body. Each of the stroking pushers 16 is operatively connected by a pin 19 to a piston rod 18 of a pneumatic cylinder 17 which is fixed on the main unit 11. A coiled spring 20 wound around the pin 19 always urges the stroking pusher 16 in a direction such that its forward free end 16a tends to take a lower position. The stroking pushers 16 are thus allowed to advance forwards across the guide passage 14 and into the respective distribution passages 15, and then to return to their home positions behind the guide passage 14 (see Figures 5 and 6). It will be understood that the pushers 16 are driven in response to the self-piercing nut assembling apparatus 7. The pushers 16 have their lower faces each formed with a cutout 21 which enables free and unhindered feeding of nuts "N" along the guide passage 14 even while the stroking pushers 16 are operating across this passage and into the distribution passages 15.

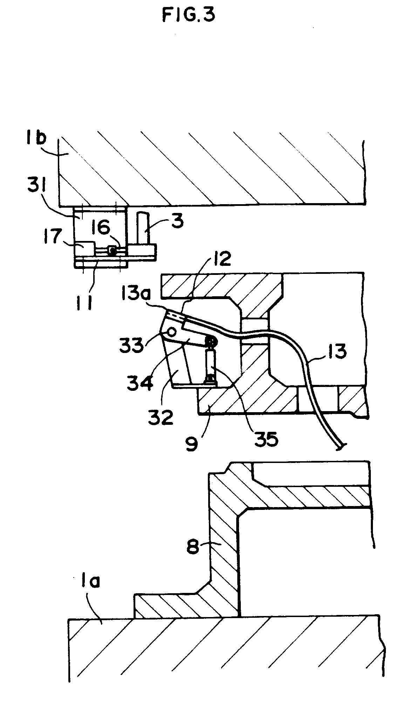

In the row feeder 10 in this case, the main unit 11 of the described structure is fixedly attached to the ram 1b by means of a bracket 31, in a manner as shown in Figure 2. A swingable arm 34 carrying the joint member 12 is journalled on a bracket 32 by a pivot 33, with this bracket being fixed to the upper mould 9. A pneumatically driven cylinder 35 drives the swingable arm 34 to rotate through an angle about the pivot 33, so that the arm 34 is swung between a horizontal position and an inclined position. As can be seen in Figure 3, the arm 34 will make such a pivotal motion to tilt the joint member 12 when the upper mould 9 is detached from the ram 1b and automatically replaced with another upper mould. Thus, an entrance end 13a of the feed chute 13 carried by the joint member 12 will adopt an obliquely raised position, such that the nuts "N" within the feed chute will not fall out of the entrance end 13a. Figure 7 illustrates a device which may preferably be employed for a surer protection of nuts "N" from unintentional droppage. The device in Figure 7 comprises a pawl 36 which is disposed on the joint member 12 and engageable with a threaded bore 22 of the nut "N" held in the feed chute 13 and disposed nearest its entrance end 13a. A bracket 37 secured to the joint member 12 has a pin 38 about which the pawl 36 can pivot, and a spring 39 wound around the pin 38, acts on the pawl 36 and urges its end downwards.

In operation, the upper mould 9 will be set in place at first on the ram 1b. Then, the swingable arm 34 will be driven causing the joint member 12 to take its horizontal position. The feed chutes 13 have thus their entrance ends 13a aligned in communication with the respective distribution passages 15 in the main unit 11. In this state, the pneumatic cylinder 17 will actuate the stroking pusher 16 to make one reciprocation in response to one operation of the self-piercing nut assembling apparatus 7. The forward free end 16a of the pusher 16 advancing forwards will thus push the nut "N" out of the guide passage 14 into the distribution passage 15, whereby the nut "N" enters the feed chute 13 through its entrance end 13a. Even while the stroking pusher is operating in this way, delivery of the following nuts "N" to the guide passage 14 will not be interrupted but can continue by virtue of the cutout 21 formed on the lower face of the pusher 16. This will diminish the queuing time for the nuts "N" to be delivered to the guide passage 14, thus minimizing time lost in supplying them through the flexible chute hose 3. On the other hand, when the pusher 16 is retracted, its bump-shaped free end 16a will be pulled backwards and slidingly over the upper face of the nut "N" which is waiting at that time in the guide passage 14, in such a manner as the broken line shows in Figure 5. Upon returning to its rearmost home position, the stroking pusher 16 will be clicked downwards by the spring 20 shown in Figure 6, whereby the free end 16a comes into contact with, or is positioned close to, the rearward surface of the nut "N" which has to be pushed next out of the guide passage 14.

If any one of the nut assembling apparatus 7 in the press 1 is made inoperative, the stroking pushers 16 corresponding to them will be kept still, with the remainder being kept active successively to feed the nuts "N".

Instead of arranging side by side the main unit 11 and the joint member 12 in a horizontal plane as in the illustrated embodiment, they may alternatively be vertically disposed up and down if the mounting space for them so compels or it is preferred to do so.

It also will be understood that the row feeder provided herein can be used not only for feeding the self-piercing nuts "N" to the illustrated nut assembling apparatus 7 but also for distributing ordinary nuts, for example to a plurality of nut welders.

The described row feeder can realize an efficient distribution of nuts to a plurality of the nut attaching apparatus such as those for self-piercing nuts.

## Claims

1. A row feeder (10) for distribution of nuts, the row feeder (10) comprising:
a main unit (11);
a guide passage (14) formed on the main unit (11) so as to receive a number of successively delivered nuts in a series;
a plurality of distribution passages (15) formed in the main unit (11) and each extending from and perpendicular to the guide passage (14);
stroking pushers (16) each reciprocable between its home position and its extended position across the guide passage (14) so as to transfer the nuts therein to the respective distribution passages (15);
drivers (17,18) causing the respective stroking pushers (16) to reciprocate; and
individual feed chutes (13) respectively connected to the distribution passages (15),
characterised in that the stroking pushers (16) are controlled to operate in response to the operation of nut attaching apparatus (7) incorporated in a press (1), each stroking pusher (16) has a lower face formed with a cutout (21) such that the successively delivered nuts (N) are not prevented from advancing forward along the guide passage (14) while any stroking pusher (16) is disposed across it to enter the distribution passage (15), and each pusher (16) is connected by a pin (19) to a piston rod (18) and is swingable vertically relative thereto, and a coiled spring (20) always urges downwards a forward free end (16a) of the pusher, such that the free end is allowed to slide backward over the nut (N) standing in the cutout (21) and on the guide passage, so as to return to the home position.

2. A row feeder according to claim 1, further comprising a joint member (12) as a separate member cooperative with the main unit (11), wherein the feed chutes (13) are fixed to the joint member (12) at given intervals and allowed thereby to communicate with the respective distribution passages (15).

## Patentansprüche

1. Reihenzuführer (10) für die Verteilung von Schraubenmuttern, wobei der Reihenzuführer (10) aufweist:
eine Haupteinheit (11),
einen Führungsdurchgang (14), der an der Haupteinheit (11) ausgebildet ist, um so eine Anzahl von nacheinander angelieferten Schraubenmuttern in einer Reihe aufzunehmen,
eine Mehrzahl von Verteilungsdurchgängen (15), die in der Haupteinheit (11) ausgebildet sind, wobei sich jeder von dem Führungsdurchgang (14) aus und senkrecht zu diesem erstreckt,
Schlagstößeln (16), die jeweils hin- und herbewegbar zwischen einer Ruheposition und einer ausgestreckten Position über den Führungsdurchgang (14) hinwegbewegbar sind, um so die darin befindlichen Muttern zu ihren jeweiligen Verteilungsdurchgängen (15) zu überführen, Antreibelementen (17, 18), welche bewirken, daß sich die jeweiligen Schlagstößel (16) hin- und herbewegen, und
individuellen Zuführrinnen, die jeweils mit den Verteilungsdurchgängen (15) verbunden sind,
**dadurch gekennzeichnet**, daß die Schlagstößel (16) so gesteuert werden, daß sie unter Ansprechen auf den Betrieb einer Mutternanbringvorrichtung (7) arbeiten, die in eine Presse (1) integriert ist, wobei jeder Schlagstößel (16) eine untere Fläche hat, die mit einer Aussparung (21) ausgebildet ist, so daß aufeinanderfolgend angelieferte Muttern (N) nicht an der Vorwärtsbewegung entlang des Führungsdurchganges (14) gehindert werden, während irgendein Schlagstößel (16) quer darüber hinwegbewegt wird, um in den Verteilungsdurchgang (15) einzutreten, und daß jeder Stößel (16) über einen Stift (19) mit einer Kolbenstange (18) verbunden und relativ zu dieser vertikal schwingfähig ist, und daß eine Schraubenfeder (20) andauernd ein vorderes freies Ende (16a) des Stößels nach unten drückt, so daß das freie Ende über die Mutter (N), welche sich in der Aussparung (21) und auf dem Führungsdurchgang befindet, nach hinten zurückgleiten kann, um auf diese Weise in die Ruheposition zurückzukehren.

2. Reihenzuführer nach Anspruch 1, welcher weiterhin ein Verbindungsteil (12) als ein getrenntes Teil aufweist, welches mit der Haupteinheit (11) zusammenwirkt, wobei die Zuführrinnen (13) an dem Verbindungsteil (12) in vorgegebenen Abständen befestigt sind und dadurch mit den jeweiligen Verteilungsdurchgängen (15) in Verbindung stehen können.

## Revendications

1. Distributeur en ligne (10) pour la distribution d'écrous, le distributeur en ligne (10) comprenant :
une unité principale (11);
un passage de guidage (14) formé sur l'unité principale (11) afin de recevoir un certain nombre d'écrous distribués successivement en une série;
une pluralité de passages de distribution (15) formés dans l'unité principale (11) et s'étendant chacun depuis le passage de guidage (14) et perpendiculairement audit passage;
des poussoirs à battement (16) allant et venant chacun entre sa position de repos et sa position déployée en travers du passage de guidage (14) afin de transférer les écrous au sein du passage jusqu'aux passages de distribution (15) respectifs;
des dispositifs d'entraînement (17, 18) amenant les poussoirs à battement (16) respectifs à aller et venir; et
des goulottes de distribution individuelles (13) reliées respectivement aux passages de distribution (15),
caractérisé en ce que les poussoirs à battement (16) sont commandés pour fonctionner en réponse à l'actionnement d'un dispositif de fixation d'écrous (7) incorporé dans une presse (1), chaque poussoir à battement (16) comporte une face inférieure dotée d'une découpe (21) de manière que les écrous distribués successivement (N) ne soient pas empêchés de progresser vers l'avant le long du passage de guidage (14) tandis qu'un poussoir à battement (16) est disposé en travers dudit passage pour pénétrer dans le passage de distribution (15), et chaque poussoir (16) est relié par une goupille (19) à une tige de piston (18) et peut osciller verticalement par rapport à celle-ci, et un ressort à boudin (20) sollicite en permanence vers le bas une extrémité libre avant (16a) du poussoir, de manière que l'extrémité libre puisse glisser vers l'arrière sur l'écrou (N) se trouvant dans la découpe (21) et sur le passage de guidage, afin de regagner la position de repos.

2. Distributeur en ligne selon la revendication 1, comprenant en outre un organe de joint (12) en tant qu'organe distinct coopérant avec l'unité principale (11), dans lequel les goulottes de distribution (13) sont fixées à l'organe de joint (12) à des intervalles donnés et adaptées ainsi à communiquer avec les passages de distribution (15) respectifs.
